# EUROPEAN PATENT SPECIFICATION

(11) **EP 2 734 366 B1**
(45) Date of publication and mention of the grant of the patent: **16.11.2016**
(21) Application number: 12815137.0
(22) Date of filing: 10.07.2012
(51) Int. Cl.: B32B 37/06, G09F 3/10, C09J 7/02, B05C 1/14, B32B 38/16, B32B 37/12

(54) **A LABEL LAMINATE AND A METHOD AND A SYSTEM FOR MANUFACTURING A LABEL LAMINATE**
ETIKETTBESCHICHTUNG SOWIE VERFAHREN UND SYSTEM ZUR HERSTELLUNG DER ETIKETTBESCHICHTUNG
STRATIFIÉ POUR ÉTIQUETTE, PROCÉDÉ ET SYSTÈME DE FABRICATION D'UN STRATIFIÉ POUR ÉTIQUETTE

(30) Priority: 20.07.2011 FI 20115763
(43) Date of publication of application: 28.05.2014
(73) Proprietor: UPM Raflatac Oy, 33310 Tampere (FI)
(72) Inventor: JOKINEN, Risto, H, FI-02660 Espoo (FI); HENTTONEN, Jorma, FI-33450 Siivikkala (FI); FORSSTRÖM, Jan-Erik, FI-00150 Helsinki (FI); PYNNÖNEN, Sampo, FI-33430 Vuorentausta (FI); HEINONEN, Kai, PL-52339 Wroclaw (PL)
(74) Representative: Tampereen Patenttitoimisto Oy
(86) International application number: PCT/FI2012/050721
(87) International publication number: WO 2013/011193

(56) References cited:
- EP-A1- 2 335 926
- WO-A1-2008/111377
- JP-A- 2008 179 659
- US-A1- 2001 030 020
- US-A1- 2004 026 024
- US-A1- 2004 026 024
- US-A1- 2008 187 702
- US-B1- 6 312 777

## Description

### Field of the Invention

This invention relates to a label laminate. In addition, this invention relates to a method for manufacturing a label laminate. The invention further relates to a system for manufacturing a label laminate.

### Background of the Invention

A label laminate typically comprises a face layer and a release liner which are laminated together. Such a label is known from US-A-2004/026024. There is usually an adhesive layer between the release liner and the face layer. When the label laminate is used, the face layer can be attached to another surface, thanks to the adhesive layer that is attached onto the face material. The release liner is mainly used to protect the adhesive layer.

### Summary of the Invention

It is an object of the present invention to provide a label laminate. Another object of the present invention is to provide a method and a system for producing a label laminate.

Plastic films are wanted for a release liner of the label laminate in order to achieve good evenness for the release liner. Plastics may shrink easily if the temperature is increased during the manufacturing process. Thus, many plastics, such as polypropylene or polyethylene, cannot be used with water based adhesives due to the necessary drying step of said water based adhesives. Therefore, an object of one embodiment of the invention is to provide a label laminate having water based adhesive layer(s) on a first material layer comprising at least one plastic film layer. Preferably, the water based adhesive layer(s) is applied onto the surface of said at least one plastic film.

It was surprisingly found by the inventors of the present invention that it is possible to use microwave energy together with a belt in order to dry water based adhesive on the first material layer comprising at least one plastic film layer. Therefore, it may be possible to avoid shrinking and/or stretching caused by the temperature and tension needed for the drying process of the water based adhesives. In other words, the first material layer comprising at least one plastic film layer (to be heated due to the drying step of the water based adhesive) can be supported in such a way that is does not shrink or stretch substantially during the drying process. In other words, the dimensions of the first material layer and/or the dimensions of a second material layer in a first direction, i.e. the dimensions in the machine direction of the material layer(s) preferably do not change more than 3%, more preferably not more than 2% or most preferably not more than 1% during the drying process. The dimensions of the first material layer and/or the dimensions of the second material layer in a second direction, i.e. the dimensions in the cross direction, preferably do not change more than 1%. The belt used in the invention may be, for example, a silicone belt or a plastic belt.

Aspects of the invention are characterized by what is stated in the independent claims. Various embodiments of the invention are disclosed in the dependent claims.

The belt is preferably used on one side of the first material layer comprising at least one plastic film layer in order to support the first material layer during the heating process. The heating process is preferably implemented by microwave energy in order to dry said at least one water based adhesive layer that is applied on the first material. At least one microwave heating device is preferably placed on the first side of the belt (i.e. the side where the first material is placed). In addition, at least one microwave heating device may be placed on the second side of the belt (i.e. the other side). In addition, air jets may be used in order to remove moisture from said at least one water based adhesive layer. In this case, the air jets are preferably placed on the first side of the belt (i.e. on the side where the plastic film is placed).

Due to the supporting of the first material comprising plastic film layer(s) during the drying process of the water based adhesive layer, it is possible to avoid so called skinning of the water based adhesive layer on the surface of the plastic film, which skinning typically traps the moisture into the adhesive and slows down the drying process of the water based adhesive.

Advantageously, the method for manufacturing the label laminate comprises
- unwinding a first material layer,
- unwinding a second material layer,
- coating the unwound first material layer with at least one water based adhesive layer,
- supporting the coated first material layer by a belt while heating said at least one water based adhesive layer by at least one heating device in order to dry said at least one water based adhesive layer, and
- laminating the first material layer comprising the at least one water based adhesive layer together with the second material layer in order to form the label laminate.

Preferably, the method further comprises:
- removing moisture from said at least one water based adhesive layer by using at least one air dryer.

Advantageously, the second material layer is laminated in a laminating nip together with the first material layer having the at least one water based adhesive layer in such a way that the label laminate comprises the water based adhesive layer between the first material layer and the second material layer.

Preferably, the first material layer comprises at least one plastic layer. Preferably the plastic film is oriented from 5 to 8 times in the machine direction. In addition or alternatively, the second material layer has preferably at least one plastic film that is oriented from 5 to 8 times in the machine direction.

The belt is preferably a silicone belt. Alternatively, the belt is preferably a plastic belt. Preferably, said at least one heating device comprises a microwave heating device.

Advantageously, the first material layer comprises at least one of the following plastic films:
- polypropylene (PP) film,
- polyethylene (PE) film, and
- polyethylene terephthalate (PET) film.
Preferably, the amount of the polypropylene (PP) is at least 50 w-% of the first material layer.

The first material layer is preferably a release liner comprising at least one backing material layer, which is coated with at least one release layer. Alternatively, the first material layer is a face layer.

Advantageously, the system for manufacturing a label laminate comprises:
- a first unwinder for unwinding a first material layer,
- a second unwinder for unwinding a second material layer,
- a coating unit for coating the unwound first material layer with at least one water based adhesive layer,
- a belt in order to support the coated first material layer during the drying process of said at least one water based adhesive layer,
- at least one heating device for drying said at least one water based adhesive on the belt, and
- means for laminating the first material layer comprising said at least one water based adhesive layer together with the second material layer in order to form the label laminate.

Advantageously, the at least one heating device comprises a microwave heating device.

Advantageously, the belt comprises a layer of friction material. In addition or alternatively, the belt is supported by support rollers.

The system preferably comprises an air dryer in order to remove moisture from said at least one water based adhesive layer.

Advantageously, the label laminate comprises a first material layer and a second material layer, which layers are laminated together and have at least one water based adhesive layer between them. The first material layer is preferably a release liner comprising at least one backing material layer comprising at least one polyethylene (PE) and/or polypropylene (PP) plastic film layer, and at least one release coating layer, which release coating layer is in contact with the at least one water based adhesive layer.

Preferably, a thickness of the release liner is between 15 and 60 microns.

Preferably, the second material is a face layer comprising at least one polyethylene (PE) and/or polypropylene (PP) plastic film layer.

Thanks to the invention, it is possible to support the first material layer with the belt during the drying process of the water based adhesive layer, wherein the heating step is implemented by microwave energy. The microwave energy is absorbed into the water; thus, the heating process may be very effective.

It is a further advantage that the label laminates may be environmentally friendly. The label laminate may be recyclable and may be reused, for example in products such as injection moulded plastic articles.

The manufactured label laminates may be die-cut into labels and later applied onto the surface of items such as bottles or other containers.

### Description of the Drawings

In the following, the invention will be illustrated by drawings in which
- Fig. 1: shows an example embodiment of a label laminate produced according to the invention,
- Fig. 2: shows an example embodiment of a release liner with a water based adhesive layer,
- Fig. 3: shows an example embodiment of a face layer with a water based adhesive layer, and
- Fig. 4: shows an example embodiment of the system.

### Detailed Description of the Invention

The following reference numbers are used in this application:
- 1: label laminate,
- 2: release liner,
- 3: backing material layer,
- 4: face layer,
- 5: release coating layer,
- 6: water based adhesive layer,
- 10: belt,
- 10a: first side of the belt,
- 10b: second side of the belt,
- 11: first unwinder,
- 12: second unwinder,
- 13: laminating nip,
- 14: rewinder of the label laminate,
- 15: coating unit,
- 20: microwave heating device, and
- 21: air dryer.

In this application, the term "label laminate" 1 refers to so called pressure sensitive label laminates and self-adhesive label laminates. Advantageously, the label laminate 1 comprises two layers which are laminated together, i.e. a release liner 2 and a face layer 4, wherein an adhesive layer 6 is provided between the release liner 2 and the face layer 4. During the manufacturing process of the label laminate 1, the adhesive layer 6 is applied to the first material layer.

The term "first direction" refers to the machine direction, i.e. to the longitudinal direction.

The term "second direction" refers to the cross direction, i.e. to the transverse direction.

The term "face layer" 4 refers to the top layer of the label laminate, also called as the face stock. The face layer 4 comprises at least one layer that is attached to another surface with an adhesive layer 6, when the label laminate 1 is used. The face layer 4 may consist of plastic film layer(s), for example, polypropylene or polyethylene film layer(s). The product consisting of the face layer(s) 4 and the adhesive layer(s) 6 is called a linerless label. In other words, it is not same product as the label laminate 1, which also comprises the release liner.

The term "label" refers to a die-cut face layer comprising a water based adhesive layer.

The term "release liner" 2 refers to a structure comprising at least one backing material layer 3 as base material and at least one release coating layer 5 on the backing material layer 3. In other words, the backing material layer 3 is usually coated with a thin layer of release agent, such as silicone. Therefore, the release liner 2 can be easily removed from the face layer 4 when the label is adhered to a substrate. The release liner may consist of plastic film layer(s), such as polypropylene or polyethylene film layer(s). The release liner 2 is used to protect the adhesive layer 6 of the label laminate 1 and to allow efficient handling up to the point where the label is dispensed and adhered to a substrate surface.

The term "first material layer" refers to a material layer to be coated. In other words, according to the present invention said at least one water based adhesive layer is applied to the surface of the first material layer.

The term "second material" refers to a material that is laminated together with the first material layer having said at least one water based adhesive layer on its surface in order to form the label laminate (1).

The present invention comprises a solution in which a belt 10, such as a silicone belt or a plastic belt, is used in order to dry at least one water based adhesive layer 6 on the release liner 2 and/or on the face layer 4. Thanks to the belt 10 used, it is possible to use plastic film(s) together with the water based adhesive(s), because the plastic film can be supported in such a way that is does not shrink or stretch substantially during the drying process of the water based adhesive layer; in other words, the dimensions in the second direction, i.e. cross direction of the first material layer and/or second material layer, do not change more than 1% during the drying process.

Water based adhesives may comprise, for example, acrylic dispersions and/or tackifier resins together with additives, such as a wetting agent, a defoamer etc.

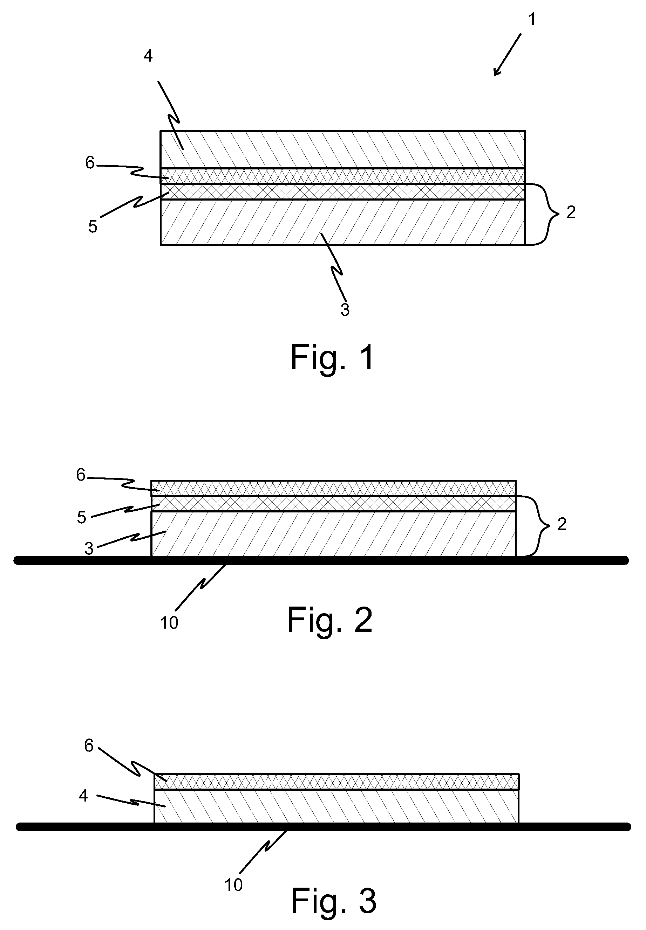

Figure 1 presents an example embodiment of the label laminate 1. The label laminate 1 presented in figure 1 comprises a face layer 4, a release liner 2 and a water based adhesive layer 6 between said layers. It is possible to apply the adhesive layer 6 on the face layer 4 and/or on the release liner 2. Preferably the applying of said at least one water based adhesive layer on the surface of the first material is implemented before the first material layer and the second material layer are laminated together.

The label laminate 1 preferably consists of the release liner(s) 2 and the face layer(s) 4, which are laminated together with the water based adhesive layer(s) 6 in between. After removal of the release liner 2, the label can be attached to the surface of an item through an adhesive layer.

Figure 2 presents an example embodiment of the release liner 2 having at least one adhesive layer 6 on the release liner 2. The release liner 2 comprises a backing material 3 and a release coating layer 5. In the figure 2, the release liner 2 with the adhesive layer 6 is shown on the belt 10.

Figure 3 presents an example embodiment of the face layer 4 having at least one adhesive layer 6 on the face layer 4. In figure 3, the face layer 4 with the adhesive layer 6 is shown on the belt 10.

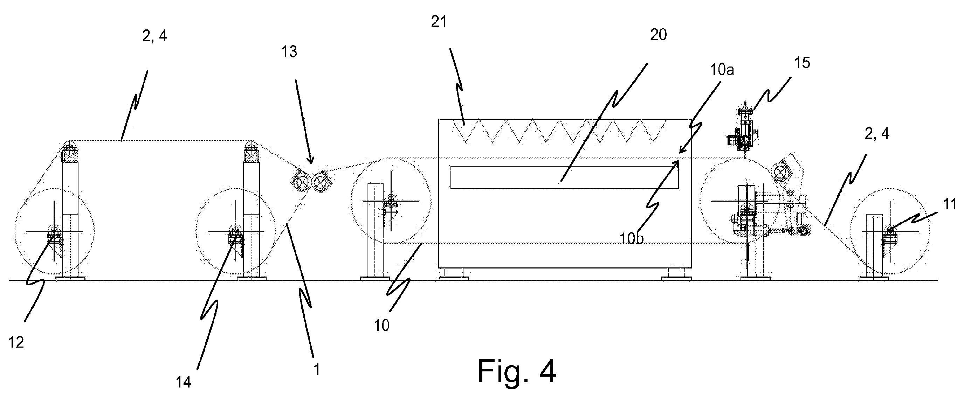

Figure 4 presents an example embodiment of the system.

Thanks to the novel solution, it is possible to manufacture a label laminate 1 having at least one water based adhesive layer 6 on the first material layer, which layer preferably comprises at least one polypropylene or polyethylene film.

According to an advantageous embodiment of the invention, dimensional changes in the second direction (cross-direction) of the first material layer during the drying process of the water based adhesive layer on said plastic film constitute less than 1%, preferably less than 0.7%. In addition, the dimensions in the first direction of the first material layer do not change more than 3%, preferably not more than 2% or 1% during the drying process. In other words, the first material layer 2, 4 does not substantially shrink or stretch during the drying process of the water based adhesive layer 6, in which drying process the first material layer 2, 4 is heated by microwave energy while the layer 2,4 is supported by the belt 10. Due to the novel solution, it is possible to manufacture a label laminate having at least one water based adhesive layer 6 on the first material layer comprising plastic film, preferably a polypropylene or polyethylene film.

The backing material layer 3 and/or the face layer 4 may consist of a monolayer film, also called a single layer film. The backing material 3 and/or the face layer 4 may alternatively comprise or consist of a multilayer plastic film structure comprising two or more layers. In that case, the multilayer structure may comprise individual plastic film layers having different compositions, or alternatively all layers may have the same composition. The monolayer film may be, for example, blown or cast. The multilayer film may be, for example, coextruded, or at least two monolayer films may be laminated together.

The face layer 4 and/or the backing material 3 may be partially or totally oriented monoaxially in the machine direction or biaxially, or it may be non-oriented. According to an example embodiment of the invention, the backing material and/or a face material has at least one plastic film that is oriented from 5 to 8 times in the machine direction.

A wide variety of plastic polymer film materials are useful for the face layer 4. The polymer film may include homopolymers, copolymers or it may be a polymer blend. For example, the film(s) may comprise polyethylene, polypropylene, polystyrene, polyester, or mixtures thereof. The polymer film(s) may also be degradable and/or derived from renewable sources, such as cellulose or lactic acid based polymer. If the water based adhesive layer 6 is dried on the face layer 4, the face layer 4 preferably comprises polypropylene or polyethylene. Polypropylene may be oriented, for example biaxially oriented, polypropylene (BOPP).

In some applications, more than one separate layers consisting of different polymers may be beneficial for the face layer 4, and permit use of different type of printing methods and/or inks and allow excellent printing properties for the label laminate 1. The face layer 4 may comprise at least one, at least three, at least five or at least seven separate layers, and at most 9, at most 7, at most 5 or at most 3 separate layers, which layers consist of films of different polymers. The number of the layers is preferably odd.

The face layer 4 may have a thickness of at least 20 microns, for example at least 30 or 40 microns, and preferably not greater than 100 microns, more preferably not greater than 90, 85 or 80 microns. According to an example embodiment, the thickness of the face material is between 20 and 90 microns.

The face layer 4 may comprise a clear plastic film structure providing a no-label look appearance. The clear plastic film structure is substantially transparent to visible light. Haze of the face layer 4 is preferably at most 25% or at most 20%, more preferably at most 15%, at most 10% or at most 8%. The clear no-label look of the face stock allows the objects beneath such layer, i.e. the bottle or contents, to be visible through such layer.

The backing material 3 preferably comprises a plastic film (polymeric film), such as polypropylene (PP), polyethylene (PE) or polyethylene terephthalate (PET) in order to achieve a smooth film backing that provides a smooth adhesive layer 6 in order to form a uniform contact with the substrate being labelled. An advantage of the plastic film is the smoothness of the surface compared to conventional paper liners. Smooth surface of the plastic film used will further provide smoothness of the adhesive coating transferred to the face layer 4. Smooth adhesive layer 6 is beneficial, for example, when clarity of transparent labels is preferred. The backing material 3 comprising plastic film(s) may also have better mechanical properties than the backing material 3 comprising paper materials, which is an advantage in automatic labelling lines where the machines must dispense and apply labels at high speed. Plastic release liners 2 have, for example, reduced occurrence of liner breakages and, thus, fewer productivity losses on the dispensing and bottling lines.

According to an advantageous embodiment of the invention, the backing material layer 3 comprises polyethylene or polypropylene, for example polypropylene homopolymer, as a main component (i.e. more than 50 w-% of the backing material layer). The release liner 2 may have a thickness of, for example between 15 and 60 microns. Thickness of the backing material 3 is preferably at least 12 microns, more preferably at least 15 or at least 20 microns. In addition, the thickness of the backing material may be not greater than 50 microns, more preferably not greater than 35 or 30 microns. According to an example embodiment of the invention, the thickness of the backing material is between 15 and 35 microns.

According to an advantageous embodiment, polypropylene is used as a raw material for at least one backing material layer 3 and/or at least one face layer 4. Polypropylene film is usually a cheaper solution compared, for example, to glassine liners. However, polypropylene has been efficiently used with hot melt adhesives only. The polypropylene film has not been usable with water based adhesives, wherein the process was far too slow (or the dryer extremely long) because of the drying time needed. Now, thanks to the new invention, it is possible to use polypropylene film together with water based adhesives. According to an example embodiment of the invention, a low temperature is used in order not to stretch the polypropylene in the machine direction and to shrink it in the cross direction when the water based adhesive is dried on the polypropylene film. However, thanks to the present invention, it may also be possible to speed up the drying process of the water based adhesives and to avoid inducing a varying degree of stretching and/or shrinking in the polypropylene film during the drying process. If the polypropylene is used in the backing material 3 and/or in the face layer 4, the polypropylene film may be oriented. According to an advantageous embodiment of the invention, a release liner is provided which comprises at least one plastic film oriented in the machine direction.

The backing material layer 3 is preferably coated with a release agent in order to form a release layer 5. The release layer 5 is used in order to achieve a release effect for the release liner 2 against the adhesive layer 6. The release agent is applied onto the upper side of the backing material 3. The release coating needs to be a material that has a low surface energy.

The release coating advantageously comprises silicone, such as crosslinkable silicone. The chemistry of the silicone defines the force required to release the adhesive (and therefore the face layer) from the backing. The release coating layer 5 may consist of silicone. The amount of the silicone on the release layer may be, for example, between 0.3 and 1.5 g/m², or between 0.6 and 1.2 g/m² (dry grammage). The silicone coating used is preferably recyclable. The release agent used in the release liner may be, but is not limited to, a one-part or two-part silicone system, preferably a 3 to 5 part silicone system.

The silicone may be, for example, UV curable. The UV curable silicone may be most preferably used because it may allow the use of lower temperatures for the curing process of the silicone.

The release liner 2 may also comprise other components, such as hydrocarbon resin and/or mineral fillers. For example, at least one kind of filler may be used in the backing material 3. If a filler is used, the amount of the filler may be from 2 to 30 weight-% based on the total weight of the backing material 3. Addition of the filler may increase the heat stability and/or the mechanical stability of the backing material 3. A certain degree of heat stability is required, for example, during the printing and die-cutting operation when the label laminate may reach a temperature of 50 to 60°C. If resin is added, the amount of the resin is preferably at least 2 w-%, at least 3 w-%, or at least 5 w-%, and at most 20 w-%, more preferably at most 10 w-%, at most 8 w-% or at most 5 w-%.

When the label laminate 1 is used, the adhesive layer 6 bonds the label to the surface of an item. The structure of the label may have one adhesive layer, or a multilayer adhesive structure including additional adhesive layer(s). The adhesive layer is applied on the face layer 4 and/or on the release liner 2 during the manufacturing process. The adhesive layer 6 of the produced label laminate 1 may have a thickness of at least 10 or 12 microns, preferably at least 14 or 16 microns, and not greater than 40 or 35 microns, preferably not greater than 30, 25 or 20 microns. The thickness of the adhesive layer may be, for example, between 16 and 20 microns. The amount of the water based adhesive may be, for example, 16 - 22 g / m² (dry grammage). The adhesive layer 6 preferably comprises a water based adhesive layer(s).

The solid content of the water based adhesive to be applied on the release liner 2 and/or on the face layer 4 is preferably between 30 and 80 w-% or between 40 and 70 w-%, more preferably between 45 and 65 w-% or between 50 and 60 w-% and most preferably between 53 and 58 w-%. The solid content of the water based adhesive layer of the manufactured label 1 is typically at least 95%. The water based adhesive used is advantageously environmentally friendly.

Microwave energy can be used in order to save the heating time and/or the heating energy needed. Due to the microwave energy, it is possible to control the temperature accurately.

According to an advantageous embodiment of the present invention, the water based adhesive layer(s) 6 is dried on the first material layer while the first material layer is supported by the belt 10. The belt 10 is preferably a silicone belt or a plastic belt, such as a nylon belt. In some cases the belt may be a metal belt. Thanks to the belt 10 used, materials which are more sensitive to heat may be used in the first material layer, because it is supported in order to avoid the shrinkage and/or stretching of said material. Therefore, it is possible, among other things, to use a higher drying temperature in order to decrease the necessary drying time of the water based adhesive while using plastic films, such as polypropylene in the first material layer.

Air resistance of the belt used may be high or low, for example, the belt may have a closed surface or the belt may be a wire. For example, in the case of polypropylene, the plastic film consists of an air impermeable material; thus, the air permeability properties of the belt 10 do not have any effect on the drying process when the adhesive is on the film used. The backing material 3 may also consist of paper. However, the invention is the most advantageous if the heated material comprises plastic film(s).

The length of the belt, the speed of the movement of the strip (i.e. belt) and the temperature of the belt are controlled in order to dry the water based adhesive layer.

The length of the belt contacted with the first material coated with the water based adhesive is preferably at least 10 m, or at least 20 m, and not greater than 50 or 40 m, or not greater than 35 or 30 m. The length of the belt may be, for example, between 20 and 40 m. The speed of the belt is preferably between 300 and 1200 m/min. The temperature of the water based adhesive layer is preferably between 70 and 90 °C, or between 75 and 85 °C, when the water based adhesive layer (on the first material layer) is removed from the belt 10. The first material layer having at least one water based adhesive layer is in contact with the belt preferably for at least 1 s or 1,5 s, advantageously for at least 1.8 s or for at least 2,0 s, and preferably for 3,5 s at the most, more preferably for 3,0 s or 2,5 s at the most. Thanks to the microwave energy used, the water based adhesive layer on the belt can be heated directly, i.e. the microwaves heat the water based adhesive layer directly.

The first material layer may need to be fixed to the belt in order to avoid any stretching and/or shrinking of the strip. This may be implemented by arching the support rollers, which support the belt 10, in the machine direction. The support rollers are preferably light-weight rollers with a low specific heat capacity. The diameter of the support rollers is preferably between 100 and 350 mm. The support rollers may be made of aluminium tube. The wall thickness of the support rollers may be, for example, between 10 and 30 mm. Due to said properties of the support rollers, start-ups and shutdowns may be implemented faster if compared to heavy support rollers with a high specific heat capacity.

It is also possible to coat a thin layer, for example between 0.5 and 2.0 mm, of friction material on the belt. The friction material may comprise rubber, such as NBR (nitrile rubber, nitrile butadiene rubber) and/or EPDM (ethylene propylene diene (monomer) rubber). It is also possible, in addition to or instead of the coating, to roughen the surface of the belt in order to obtain an uneven surface, i.e. predetermined coarseness of the surface of the belt. The system according to the present invention preferably comprises at least one unwinder 11, 12 for the release liner 2, and at least one unwinder 11, 12 for the face layer 4. In addition, the system preferably comprises a coating unit 15 for the application of the water based adhesive(s).

The first unwinder 11 is used for the first material 2, 4 that will be coated by the coating unit 15. The second unwinder 12 is preferably used for the second material, i.e. for the material to be laminated in a laminating nip 13 together with the first material comprising the water based adhesive layer.

According to an advantageous embodiment of the invention, the first material layer 2,4 to be coated is unwound by the first unwinder 11, after which the first material layer 2,4 is lead to the belt 10. The at least one water adhesive layer may be applied to the surface of the first material layer on the belt 10 and/or before the belt 10. After said coating step, the at least one water based adhesive layer 6 on the first material 2,4 is dried by a heating device 20, 21 (i.e. the microwave heating device and/or an air dryer 21). After the drying step of said at least one water based adhesive layer, the first material layer 2,4 is laminated together with a second material layer 2,4 in a laminating nip 13 in order to form a label laminate 1.

The system may also comprise a cooling cylinder between the heating device(s) 20, 21 and the laminating nip 13. The speed of the rollers 12, 11, 14 in the system is preferably substantially the same in order not to stretch the plastic film(s) used for the release liner 2 and/or the face layer 4. In other words, the speed difference of the rollers 11, 12, 14 is preferably 0.5% at the most.

The first material layer is preferably the release liner 2 and the second material layer is preferably the face layer 4. According to an example embodiment, the first material layer is the face layer and the second material layer is the release liner.

The solution according to the present invention gives great possibilities to have an exactly correct temperature profile in relation to the time of the heating. The time and energy needed for the drying of the water based adhesive may be reduced by the new method.

This invention is in principle usable in any label applications in which the material needs to be dried. The total label structure may also comprise other layers in order to improve the properties, such as label functionality, conformability, printability, die-cutting, mechanical properties, or visual appearance.

Advantageously, thickness of the backing material 3 is between 15 and 35 microns, more preferably between 20 and 30 microns. The backing material 3 may comprise at least three layers. In this case, there are preferably two outermost layers of the backing material, and at least one layer is between the outermost layers of the backing material. The outermost layers of the backing material preferably contain PP-liner, which preferably contain PP-homopolymer, PP-copolymer or mixtures of these. The at least one layer between the outermost layers, i.e. so called core-layer, may contain PP-liner, which preferably contains PP-homopolymer, PP-copolymers, blends of these, or blends of these with hydrocarbon resin.

The release liner 2 preferably contains PP-homopolymer, PP-copolymers, blends of these, or blends of these with hydrocarbon resin. Advantageously, the release liner is biaxially oriented or mono-axially -oriented. Advantageously, the release liner is oriented in such a way, that the release liner is oriented at least 3 times, preferably from 3 to 9 times, from 4 to 8 times or from 5 to 7 in the machine direction (MD).

Advantageously, the amount of the PP and/or PE, most preferably the amount of the PP, is at least 50%, or at least 60%, more preferably at least 70% or at least 80%, and most preferably at least 90% calculated from the total weight of the release liner 2.

Advantageously, thickness of the release liner 2 is between 5 and 60 microns, more preferably between 10 and 40 microns, and most preferably between 15 and 35 microns. The release liner may have, for example, one, two, three, four, five, six or seven layers.

Advantageously, the face layer 4 comprises or consists of a polyethylene film or a polypropylene film, or a film that comprises or consists of polyethylene and polypropylene. In the case of the polypropylene film, the polypropylene film is preferably non-oriented or oriented in one or both directions.

Advantageously, the amount of the PP and/or PE, most preferably the amount of the PP, is at least 50%, or at least 60%, more preferably at least 70% or at least 80%, and most preferably at least 90% calculated from the total weight of the face layer.

Advantageously, the first material layer is coated with at least one water based adhesive layer by a contactless method, preferably by a curtain coating method. The curtain coating method and other contactless methods have the advantage that the coating process is non-statical, i.e the coating method is substantially pressureless. In addition, the adhesive layer follows the contour of the base surface, i.e. the thickness of the coating layer remains unaltered.

Advantageously, the first material layer is coated with at least one water based adhesive layer by using the curtain coating method. The quantity of the water based adhesive layers may vary. Preferably there are 1, 2, 3, 4, 5 or 6 water based adhesive layers on the first material layer, more preferably 1, 2 or 3 water based adhesive layers on the first material layer. Advantageously, every adhesive layer is formed in a same curtain coating procedure. The total amount of the adhesive on the first material layer is preferably between 5 and 40 g/m², more preferably between 10 and 30 g/m², and most preferably between 10-20 g/m².

The speed of the belt is preferably at least 280 m/min, more preferably at least 300 m/min or at least 320 m/min, and most preferably at least 350 m/min or at least 370 m/min. The first material layer may easily stretch due to tensile forces. Therefore, the tensile forces directed to the first material during the drying step of the water based adhesive layer are preferably less than 150 N/m, more preferably less than 100 N/m or less than 70 N/m, and most preferably less than 50 N/m or less than 40 N/m.

One skilled in the art readily understands that the different embodiments of the invention may have applications in environments where optimization of making a label is desired. It is also obvious that the present invention is not limited solely to the above-presented embodiments, but it can be modified within the scope of the appended claims.

## Claims

1. A method for manufacturing a label laminate (1), the method comprising:
- unwinding (11) a first material layer,
- unwinding (12) a second material layer,
- coating (15) the unwound first material layer with at least one water based adhesive layer (6),
- supporting the coated first material layer by a belt (10) while heating said at least one water based adhesive layer (6) by at least one heating device (20, 21) in order to dry said at least one water based adhesive layer (6),
- laminating the first material layer comprising the at least one water based adhesive layer together with the second material layer (2, 4) in order to form the label laminate (1).

2. The method according to claim 1, **characterized in that** said at least one heating device comprises a microwave heating device.

3. The method according to the claim 1 or 2, **characterized in that** the first material layer and/or the second material layer comprises at least one plastic film layer.

4. The method according to any of the preceding claims, **characterized in that** at least one of the first material layer and the second material layer has at least one plastic film that is oriented from 5 to 8 times in the machine direction.

5. The method according to any of the preceding claims, **characterized in that** the belt (10) is a silicone belt or a plastic belt.

6. The method according to any of the preceding claims, **characterized in that** the method comprises:
- removing moisture from said at least one water based adhesive layer (6) by using at least one air dryer (21).

7. The method according to any of the preceding claims, **characterized in that** the first material layer comprises at least one of the following plastics:
- polypropylene (PP),
- polyethylene (PE), and
- polyethylene terephthalate (PET).

8. The method according to any of the preceding claims, **characterized in that** the first material layer comprises polypropylene, and the amount of the polypropylene (PP) is at least 50 w-% of the first material layer.

9. The method according to any of the preceding claims, **characterized in that** the first material layer is a face layer (4), or the first material layer is a release liner (2) comprising at least one backing material layer (3), which is coated with at least one release layer (5).

10. The method according to any of the preceding claims, **characterized in that** the second material layer is laminated in a laminating nip (13) together with the first material layer having the at least one water based adhesive layer in such a way that the label laminate comprises the water based adhesive layer between the first material layer and the second material layer

11. A system for manufacturing a label laminate, the system comprising:
- a first unwinder (11) for unwinding a first material layer,
- a second unwinder (12) for unwinding a second material layer,
- a coating unit (15) for coating the unwound first material layer with at least one water based adhesive layer (6),
- a belt (10) in order to support the coated first material layer during the drying process of said at least one water based adhesive layer (6),
- at least one heating device (20, 21) for drying said at least one water based adhesive on the belt (10), and
- means (13, 14) for laminating the first material layer (4) comprising said at least one water based adhesive layer together with the second material layer (2) in order to form the label laminate (1).

12. The system according to claim 11 **characterized in that** at least one heating device comprises a microwave heating device and/or an air dryer (21).

13. The system according to claim 11 or 12, **characterized in that** the belt (10) comprises a layer of friction material.

## Patentansprüche

1. Verfahren zur Herstellung eines Etikettenlaminats (1), wobei das Verfahren Folgendes umfasst:
- Abwickeln (11) einer ersten Materialschicht,
- Abwickeln (12) einer zweiten Materialschicht,
- Beschichten (15) der abgewickelten ersten Materialschicht mit mindestens einer wasserbasierten Klebstoffschicht (6),
- Tragen der beschichteten ersten Materialschicht durch ein Band (10) während des Erhitzens der zumindest einen wasserbasierten Klebstoffschicht (6) durch mindestens eine Heizeinrichtung (20, 21), um die mindestens eine wasserbasierte Klebstoffschicht (6) zu trocknen,
- Laminieren der ersten Materialschicht, die die mindestens eine wasserbasierte Klebstoffschicht aufweist, zusammen mit der zweiten Materialschicht (2, 4), um das Etikettenlaminat (1) zu bilden.

2. Verfahren gemäß Anspruch 1, **dadurch gekennzeichnet, dass** die mindestens eine Heizvorrichtung eine Mikrowellenerwärmungseinrichtung aufweist.

3. Verfahren gemäß Anspruch 1 oder 2, **dadurch gekennzeichnet, dass** die erste Materialschicht und/oder die zweite Materialschicht mindestens eine Kunststofffolienschicht aufweist.

4. Verfahren gemäß einem der vorhergehenden Ansprüche, **dadurch gekennzeichnet, dass** mindestens entweder die erste Materialschicht oder die zweite Materialschicht mindestens eine Kunststofffolie aufweist, die 5-bis 8-fach in Maschinenrichtung ausgerichtet ist.

5. Verfahren gemäß einem der vorhergehenden Ansprüche, **dadurch gekennzeichnet, dass** das Band (10) ein Silikonband oder ein Kunststoffband ist.

6. Verfahren gemäß einem der vorhergehenden Ansprüche, **dadurch gekennzeichnet, dass** das Verfahren Folgendes umfasst:
- Entfernen von Feuchtigkeit aus der mindestens einen wasserbasierten Klebstoffschicht (6) unter Verwendung von mindestens einem Lufttrockner (21).

7. Verfahren gemäß einem der vorhergehenden Ansprüche, **dadurch gekennzeichnet, dass** die erste Materialschicht mindestens einen der folgenden Kunststoffe aufweist:
- Polypropylen (PP),
- Polyethylen (PE), und
- Polyethylenterephthalat (PET).

8. Verfahren gemäß einem der vorhergehenden Ansprüche, **dadurch gekennzeichnet, dass** die erste Materialschicht Polypropylen aufweist, und die Menge an Polypropylen (PP) mindestens 50 Gewicht-% der ersten Materialschicht beträgt.

9. Verfahren gemäß einem der vorhergehenden Ansprüche, **dadurch gekennzeichnet, dass** die erste Materialschicht eine Sichtschicht (4) ist, oder die erste Materialschicht eine Trennlage (2) ist, die mindestens eine Trägermaterialschicht (3) aufweist, die mit mindestens einer Trennschicht (5) beschichtet ist.

10. Verfahren gemäß einem der vorhergehenden Ansprüche, **dadurch gekennzeichnet, dass** die zweite Materialschicht in einem Laminierwalzenspalt (13) zusammen mit der ersten Materialschicht, die die mindestens eine wasserbasierte Klebstoffschicht aufweist, so laminiert wird, dass das Etikettenlaminat die wasserbasierte Klebstoffschicht zwischen der ersten Materialschicht und der zweiten Materialschicht aufweist.

11. Ein System zum Herstellen eines Etikettenlaminats, wobei das System Folgendes aufweist:
- eine erste Abwickelvorrichtung (11) zum Abwickeln einer ersten Materialschicht,
- eine zweite Abwickelvorrichtung (12) zum Abwickeln einer zweiten Materialschicht,
- eine Beschichtungseinheit (15) zum Beschichteten der abgewickelten ersten Materialschicht mit mindestens einer wasserbasierten Klebstoffschicht (6),
- ein Band (10), um die beschichtete erste Materialschicht während des Trockenvorgangs der mindestens einen wasserbasierten Klebstoffschicht (6) zu tragen,
- mindestens eine Heizvorrichtung (20, 21) zum Trocknen der mindestens einen wasserbasierten Klebstoffschicht auf dem Band (10), und
- Mittel (13, 14) zum Laminieren der ersten Materialschicht (4), die die mindestens eine wasserbasierte Klebstoffschicht aufweist, zusammen mit der zweiten Materialschicht (2), um das Etikettenlaminat (1) zu bilden.

12. System gemäß Anspruch 11, **dadurch gekennzeichnet, dass** die mindestens eine Wärmevorrichtung eine Mikrowellenerwärmungseinrichtung und/oder einen Lufttrockner (21) aufweist.

13. System gemäß Anspruch 11 oder 12, **dadurch gekennzeichnet, dass** das Band (10) eine Schicht aus Reibungsmaterial aufweist.

## Revendications

1. Procédé de fabrication d'un stratifié (1) pour étiquettes, le procédé comprenant :
- le déroulement (11) d'une première couche de matériau,
- le déroulement (12) d'une deuxième couche de matériau,
- le revêtement (15) de la première couche de matériau déroulée avec au moins une couche (6) d'adhésif à base aqueuse,
- le support de la première couche de matériau revêtue par une courroie (10) tout en chauffant ladite au moins une couche (6) d'adhésif à base aqueuse par au moins un dispositif de chauffage (20, 21) afin de sécher ladite au moins une couche (6) d'adhésif à base aqueuse,
- la stratification de la première couche de matériau comprenant l'au moins une couche d'adhésif à base aqueuse ensemble avec la deuxième couche de matériau (2, 4) afin de former le stratifié (1) pour étiquettes.

2. Procédé selon la revendication 1, **caractérisé en ce que** ledit au moins un dispositif de chauffage comprend un dispositif de chauffage à micro-ondes.

3. Procédé selon la revendication 1 ou 2, **caractérisé en ce que** la première couche de matériau et/ou la deuxième couche de matériau comprennent/comprend au moins une couche de film plastique.

4. Procédé selon l'une quelconque des revendications précédentes, **caractérisé en ce que** au moins une de la première couche de matériau et de la deuxième couche de matériau a au moins un film plastique qui est orienté de 5 à 8 fois dans le sens machine.

5. Procédé selon l'une quelconque des revendications précédentes, **caractérisé en ce que** la courroie (10) est une courroie en silicone ou une courroie en plastique.

6. Procédé selon l'une quelconque des revendications précédentes, **caractérisé en ce que** le procédé comprend :
- l'élimination de l'humidité de ladite au moins une couche (6) d'adhésif à base aqueuse en utilisant au moins un sécheur à air (21).

7. Procédé selon l'une quelconque des revendications précédentes, **caractérisé en ce que** la première couche de matériau comprend au moins un des plastiques suivants :
- polypropylène (PP),
- polyéthylène (PE), et
- poly(téréphtalate d'éthylène) (PET).

8. Procédé selon l'une quelconque des revendications précédentes, **caractérisé en ce que** la première couche de matériau comprend du polypropylène, et la quantité de polypropylène (PP) est au moins 50% en poids de la première couche de matériau.

9. Procédé selon l'une quelconque des revendications précédentes, **caractérisé en ce que** la première couche de matériau est une couche de face (4), ou bien la première couche de matériau est une protection antiadhésive (2) comprenant au moins une couche de matériau de dos (3), qui est revêtue avec au moins une couche antiadhésive (5).

10. Procédé selon l'une quelconque des revendications précédentes, **caractérisé en ce que** la deuxième couche de matériau est stratifiée dans un rouleau pinceur de stratification (13) ensemble avec la première couche de matériau ayant l'au moins une couche d'adhésif à base aqueuse de telle manière que le stratifié pour étiquettes comprend la couche d'adhésif à base aqueuse entre la première couche de matériau et la deuxième couche de matériau.

11. Système de fabrication d'un stratifié pour étiquettes, le système comprenant :
- une première dérouleuse (11) pour dérouler une première couche de matériau,
- une deuxième dérouleuse (12) pour dérouler une deuxième couche de matériau,
- une unité de revêtement (15) pour revêtir la première couche de matériau déroulée avec au moins une couche (6) d'adhésif à base aqueuse,
- une courroie (10) afin de supporter la première couche de matériau revêtue lors du processus de séchage de ladite au moins une couche (6) d'adhésif à base aqueuse,
- au moins un dispositif de chauffage (20, 21) pour sécher ledit au moins un adhésif à base aqueuse sur la courroie (10), et
- un moyen (13, 14) pour stratifier la première couche de matériau (4) comprenant ladite au moins une couche d'adhésif à base aqueuse ensemble avec la deuxième couche de matériau (2) afin de former le stratifié (1) pour étiquettes.

12. Système selon la revendication 11 **caractérisé en ce qu'**au moins un dispositif de chauffage comprend un dispositif de chauffage à micro-ondes et/ou un sécheur à air (21).

13. Système selon la revendication 11 ou 12, **caractérisé en ce que** la courroie (10) comprend une couche de matériau de friction.
